# EUROPÄISCHE PATENTSCHRIFT

(11) **EP 0 484 313 B1**
(45) Veröffentlichungstag und Bekanntmachung des Hinweises auf die Patenterteilung: **23.08.1995**
(21) Anmeldenummer: 91890253.7
(22) Anmeldetag: 24.10.1991
(51) Int. Cl.: H02K 3/52, H02K 3/50, H02K 5/22, H01R 23/10

(54) **Elektromotor mit einem Steckerteil für die Kontaktierung der Drähte von Statorwicklungen**
Electromotor with a connector for connecting the wires of the stator windings
Electromoteur comportant un connecteur pour la connexion des fils des enroulement du stator

(30) Priorität: 02.11.1990 AT 2210/90
(43) Veröffentlichungstag der Anmeldung: 06.05.1992
(73) Patentinhaber: AUSTRIA Antriebstechnik G. Bauknecht Aktiengesellschaft, 8740 Zeltweg-Spielberg (Steiermark) (AT)
(72) Erfinder: Egger, Otto, A-8911 Admont (Steiermark) (AT); Sommer, Rudolf, A-8715 St. Lorenzen (Steiermark) (AT)
(74) Vertreter: Beer, Manfred, Dipl.-Ing.

(56) Entgegenhaltungen:
- EP-A- 0 001 908
- EP-A- 0 029 328
- DE-A- 3 445 137
- DE-A- 3 534 883
- DE-B- 2 758 637
- US-A- 4 028 570

## Beschreibung

Die Erfindung betrifft einen Elektromotor, insbesondere Rasenmähermotor, mit den Merkmalen des einleitenden Teils des unabhängigen Anspruches 1.

Um die Statorwicklungen von Elektromotoren elektrisch zu kontaktieren, werden die von den Statorwicklungen wegführenden Enden der die Wicklung bildenden Drähte mit Litzendrähten verbunden und dann an eine Stromquelle und an einen Kondensator, soweit ein solcher vorgesehen ist, angeschlossen.

Diese Arbeitsweise ist sehr aufwendig und gewährleistet nicht immer, daß die entsprechende Kontaktierung und der gewünschte geringe Spannungsabfall über die Verbindungsstelle gewährleistet ist.

Aus der DE-A 34 45 137 ist ein Elektromotor mit den eingangs genannten Merkmalen bekannt.

Die DE-A 35 34 883 offenbart einen Steckerteil für die Kontaktierung der Drähte von Statorwicklungen von Elektromotoren, wobei der Steckerteil einen Fuß aufweist, der an der einen Stirnfläche des Statorpaketes aufliegt. Ferner ist dieser Steckerteil mittels eines Schwalbenschwanzes in einer entsprechenden Nut an der äußeren Umfangsfläche des Ständerblechpaktes festgeklemmt.

Der Erfindung liegt die Aufgabe zugrunde, einen einfach aufgebauten Steckerteil der eingangs genannten Gattung anzugeben, mit welchem die Kontaktierung von Statorwicklungen unmittelbar möglich ist.

Erfindungsgemäß wird diese Aufgabe mit den Merkmalen des unabhängigen Anspruches 1 gelöst.

Dadurch, daß ein Steckerteil vorgesehen ist, der an dem Statorpaket festgelegt werden kann, können die Enden der die Statorwicklung bildenden Drähte unmittelbar mit Kontaktteilen, meistens Steckhülsen, die in dem Steckerteil angeordnet sind, verbunden werden. Dadurch entfällt die zusätzliche Verwendung von Litzen, Drähten und Kabeln, über welche die Enden der Drähte der Statorwicklung elektrisch leitend an andere Bauteile (z.B. Kondensator) bzw. eine Stromquelle anzuschließen sind.

Da der Fuß des Steckerteils der Erfindung zwei vorspringende Zinken aufweist, die an den voneinander abgekehrten Seiten zweier benachbarter Nutisolationen angreifen und da zwischen den beiden Zinken ein zwischen die benachbarten Nutisolationen wenigstens teilweise eingreifender Vorsprung vorgesehen ist, wird ein verbesserter Sitz des Steckerteils gewährleistet, da dieser an zwei benachbarten Nutisolationen anliegt und daher um eine zur Achse des Statorpaketes parallele Achse nicht kippen kann.

Dadurch, daß beim erfindungsgemäßen Motor zwischen dem an der wenigstens einen Nutisolation der Statorpaketwicklung anliegenden Fuß und dem Gehäuse des Steckerteils auf der vom Stator weg weisenden Seite desselben eine nach oben ragende Wand vorgesehen ist, sind die zum Steckerteil führenden Enden der die Statorwicklung bildenden Drähte zusätzlich mechanisch geschützt und können beispielsweise nicht am Lagerschild, das auf das Statorpaket angesetzt wird, anliegen.

Ein verbesserter Sitz nach Art einer Schnappverbindung kann erreicht werden, wenn die einander zugekehrten Ränder der Zinken des Fußes des Steckerteils vom Steckerteil weg aufeinander zu konvergieren und federnd ausgeführt sind.

In einer einfachen Ausführungsform des erfindungsgemäßen Motors ist vorgesehen, daß im Steckerteil Kontakte eingesetzt sind, mit welchen die die Statorwicklung bildenden Drähte unmittelbar, elektrisch leitend verbunden sind. Bei dieser Ausführungsform kann mit Vorteil vorgesehen sein, daß im Steckerteil zwei nebeneinander angeordnete Kontaktteile für die Netzzuleitung und zwei nebeneinander angeordnete Kontaktteile für die Kondensatorableitung vorgesehen sind.

Ein verbesserter Schutz und eine räumlich günstige Anordnung ergibt sich, wenn die Enden der Wand seitlich über das Gehäuse des Steckerteils vorstehen und zum Kopf der Statorwicklung hin abgewinkelt sind.

Eine stabile Schutzwand zwischen den von der Statorwicklung weg führenden Enden der sie bildenden Drähte und dem Lagerschild wird erreicht, wenn die vom Steckergehäuse abstehende Wand gegenüber dem Steckerteil durch Versteifungsrippen, vorzugsweise zwei Versteifungsrippen am Ende des Gehäuses des Steckerteils, abgestützt ist.

Um den Steckerteil auch bei zusammengebautem Motor, d.h. bei Betrieb desselben zu sichern, so daß er bei Erschütterungen und Vibrationen nicht von seinem reib- oder formschlüssigen Sitz an den Nutisolationen gleitet, kann im Rahmen der Erfindung vorgesehen sein, daß in dem Lagerschild, das auf der Stirnseite des Stators angesetzt ist, an dem auch der Steckerteil befestigt ist, eine Ausnehmung vorgesehen ist und daß wenigstens ein Rand der Ausnehmung wenigstens an der von der Stirnfläche des Stators abgekehrten Fläche des Steckerteils, vorzugsweise am unteren Ende der Versteifungsrippen der vom Steckerteil abstehenden Wand, anliegt. Auf diese Weise wird der Steckerteil zusätzlich vom Lagerschild gehalten, indem dieses mit den Rändern seiner den Steckerteil umgreifenden Ausnehmung an diesem anliegt.

Der erfindungsgemäße Motor kann als Steckerteil zur Aufnahme von Gegensteckern oder zur Aufnahme von einzelnen Kontaktzungen, die beispielsweise mit Litzen, Drähten oder Kabeln verbunden sind, ausgeführt sein. Im ersteren Fall kann vorgesehen sein, daß dem Steckerteil zwei zweipolige Stecker, die gegebenenfalls durch eine rast- oder druckknopfartige Verbindung zu einem vierpoligen Stecker vereinigt werden können, zugeordnet sind.

Wenn beispielsweise Einzellitzen mit Kontaktzungen/Kontakthülsen oder Stecker/Steckhülsen angeschlossen werden sollen, empfiehlt sich eine Ausführungsform, bei welcher vorgesehen ist, daß der Steckerteil über die Kontakte, die mit den Drähten der Statorwicklung unmittelbar verbunden sind, nach außen verlängert ist und daß die Kontakte für eine unmittelbare Verbindung mit Kontaktzungen/Kontakthülsen oder Stecker/Steckhülsen eingerichtet sind, wobei am dem Fuß abgekehrten Ende des Steckerteils, bezogen auf die Achse des Stators, radiale Auslaßöffnungen für Litzen und/oder achsial gerichtete Austrittsöffnungen für Litzen vorgesehen sein können. Dabei kann vorgesehen sein, daß die radialen Austrittsöffnungen mit den achsialen Austrittsöffnungen durch jeweils eine Verbindungsöffnung verbunden sind. Auf diese Weise können die an die Kontaktzungen/Kontakthülsen oder Stecker/Steckhülsen angeschlossenen Einzellitzen ohne weiteres in die Austrittsöffnung für eine achsiale Ausrichtung der Litzen eingeführt werden, wodurch eine zusätzliche Fixierung im Gerät gegeben ist.

Um das allfällige Lösen von Steckverbindungen, insbesondere bei Einzelanschlüssen, zu ermöglichen, kann vorgesehen sein, daß in der von der Stirnfläche des Stators abgekehrten Wand des Gehäuses des Steckerteils im Bereich jeder Kontaktes ein Fenster vorgesehen ist, durch das eine Rastfeder einer Kontaktzunge zum Lösen dieser Kontaktzunge niedergedrückt werden kann.

Weitere Einzelheiten und Vorteile des erfindungsgemäßen Elektromotors und Anwendungsmöglichkeiten desselben ergeben sich aus der nachstehenden Beschreibung der in den Zeichnungen dargestellten Ausführungsbeispiele.

### Es zeigt:

Fig. 1 einen Elektromotor von einem Lagerschild aus gesehen,
Fig. 2 den Elektromotor aus Fig. 1 im Axialschnitt,
Fig. 3 eine andere Ausführungsform eines Elektromotors mit Steckerteil,
Fig. 4 eine Draufsicht auf eine Ausführungsform eines Steckerteils,
Fig. 5 eine Unteransicht des Steckerteils aus Fig. 4,
Fig. 6 einen Schnitt längs der Linie VI-VI von Fig. 4 in vergrößertem Maßstab und
Fig. 7 einen Schnitt längs der Linie VII-VII in Fig. 4.

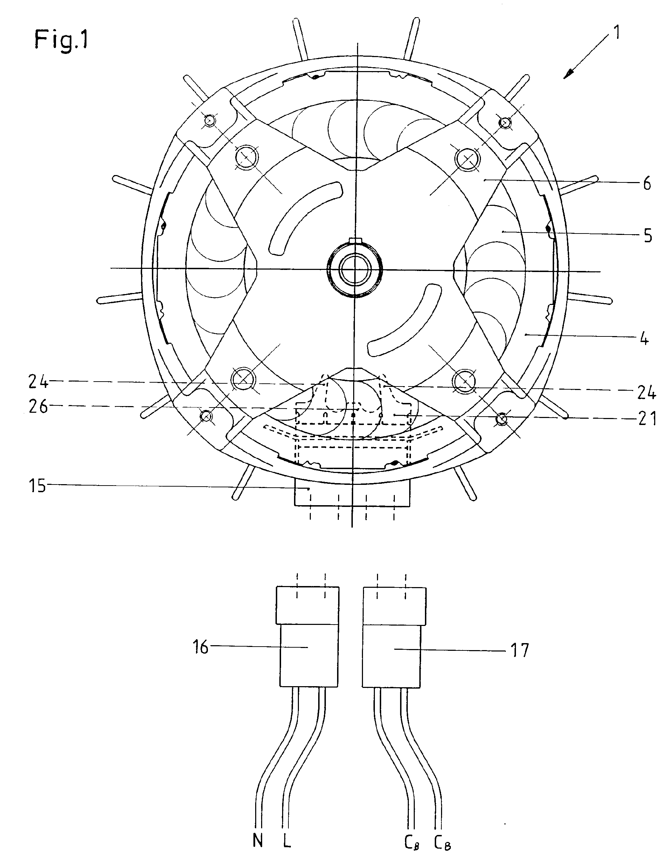

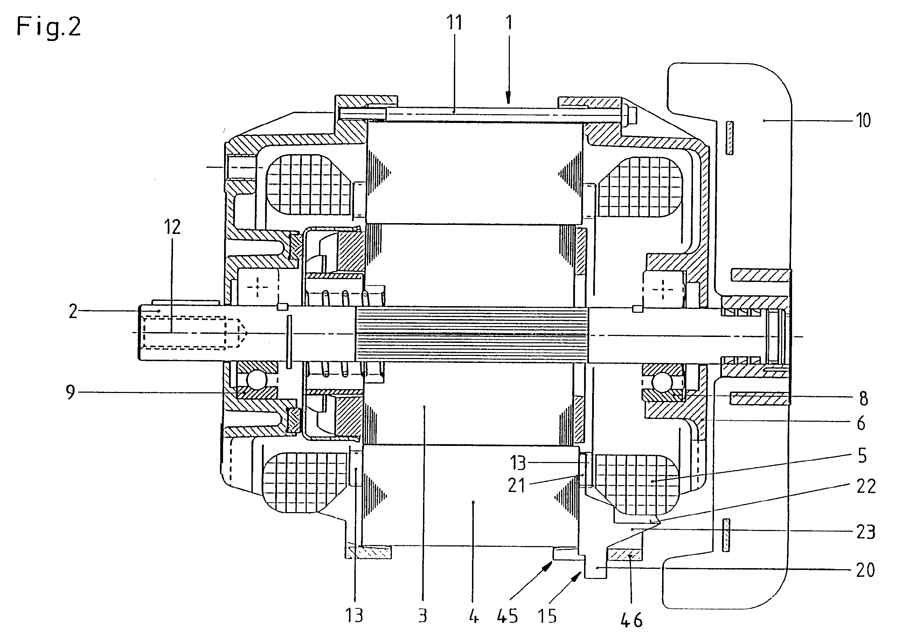

Wie aus den Fig. 1 und 2 ersichtlich, besteht der Elektromotor 1 (Rasenmähermotor) aus einem auf einer Welle 2 montierten Rotor 3, der innerhalb eines Statorpaketes 4 mit Statorwicklungen 5 durch in Lagerschilde 6 und 7 eingesetzte Lager 8 und 9 drehbar gelagert ist. Im in Fig. 2 links liegenden Ende ist ein Elektromotor, der ein Rasenmähermotor ist, mit einer mechanischen Bremse ausgestattet, welche eine Bauform besitzt, wie sie aus der EP-A-136 282 oder der EP-A-348 379 bekannt ist.

Am gegenüberliegenden Ende der Welle 2 des Rotors 3 ist kann noch ein Lüfterflügel 10 aufgepreßt sein. Die beiden Lagerschilde 6 und 7 werden über Zugschrauben 11 zusammengehalten.

Obwohl nicht gezeigt, sind die Wicklungen der Statorwicklung 5 in an der Innenseite des Statorpaketes 4 ausgesparten, zur Achse 12 des Elektromotors 1 parallel ausgerichteten Nuten aufgenommen. Um eine unmittelbare Berührung zwischen den Drähten der Statorwicklung 5 und dem Werkstoff des Statorpaketes 4 zu vermeiden, sind in die Nuten sogenannte Nutenisolierungen 13 eingesetzt (in Fig. 2 sind die Enden derselben sichtbar), wobei die durch die Nuten laufenden Teile der Statorwicklungen 5 in den etwa U-förmig ausgebildeten Nutenisolierungen 13 aufgenommen sind.

Auf die Enden der Nutenisolierungen 13 ist der in Fig. 1 und 2 gezeigte Steckerteil 15 aufgesetzt. Im Steckerteil 15 sind nicht näher gezeigte Kontaktstücke, z.B. Kontaktzungen/Kontakthülsen oder Stecker/Steckhülsen, eingesetzt, an welche die Enden der Drähte der Wicklung 5 des Statorpaketes 4 unmittelbar, elektrisch leitend, z.B. durch Preßverformen ("Crimpen"), Schweißen oder Löten an geschlossen sind. Für den Fall von Elektromotoren 1 mit Kondensator sind zwei Kontakte für die Netzzuleitung und zwei Kontakte für die Kondensatorableitung vorgesehen. Dabei werden die Kontakte für die Netzzuleitung über einen Stecker 16 mit dem Netz verbunden, wogegen ein Stekker 17 für den Anschluß an einen nicht gezeigten Kondensator dient.

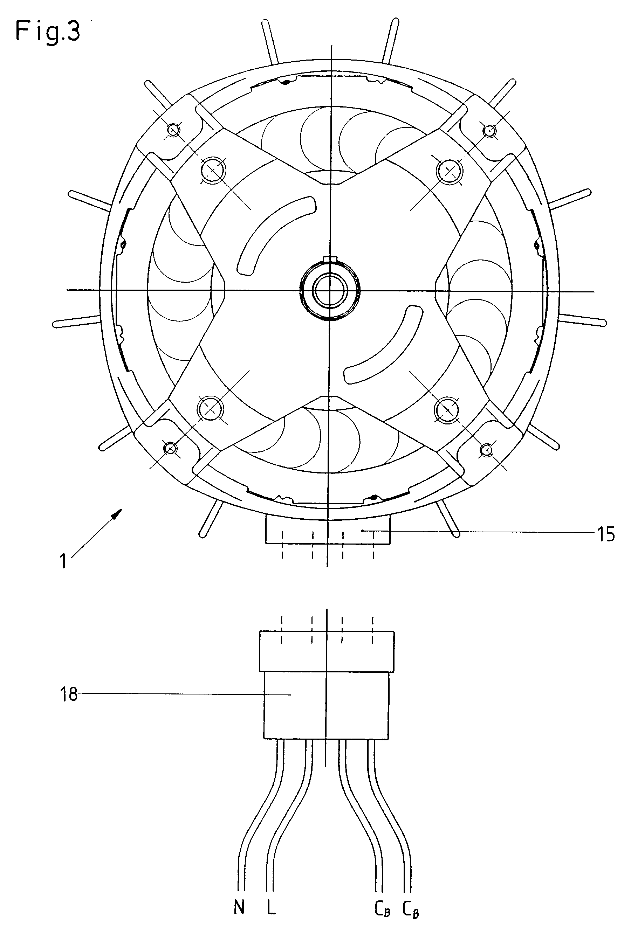

Wie in Fig. 3 angedeutet, können die Stecker 16 und 17 auch zu einem einzigen Stecker 18 vereinigt werden, wobei auch eine Ausführungsform möglich ist, bei der die beiden Stecker 16 und 17 wahlweise miteinander zu einem Doppelstecker, d.h. einem Stecker mit vier Kontaktzungen, die in die Kontakte, z.B. die Kontaktschuhe im Steckerteil 15 eingreifen, verbunden werden können. Als Verbindungen für die beiden Stecker 16 und 17 können beliebige rast-, schnapp- oder druckknopfartige Verbindungen herangezogen werden.

Der Steckerteil 15 besteht aus einem Gehäuse 20 und einem Fuß 21, wobei zwischen Gehäuse 20 und Fuß 21 eine vom Fuß 21 im wesentlichen senkrecht abstehende Wand 22 mit abgewinkelten Enden 22′ vorgesehen ist. Die Wand 22 ist durch dreieckförmige Rippen 23 gegenüber dem Gehäuse 20 abgestützt.

Der Fuß 21 des Steckerteils 15 besitzt zwei vorstehende Zinken 24, deren einander zugekehrte Ränder 25 zum freien Ende der Zinken 24 hin aufeinander zu konvergieren und federnd ausgebildet sind. Zwischen den beiden Zinken 24 ist noch ein vorspringender Teil 26 vorgesehen. Wenn der Steckerteil 15 mit seinem Fuß 21 an den Nutenisolierungen 13 bzw. deren Enden angesetzt wird, legen sich die Ränder 25 der beiden vorspringenden Zinken 24 an die Außenflächen von zwei benachbarten Nutenisolierungen 13 an und der Vorsprung 26 greift in den Raum zwischen den beiden Nutenisolierungen 13 ein. Auf diese Weise wird der Stekkerteil 15 sicher an den Nutenisolierungen 13 reib- bzw. formschlüssig festgehalten und freistehende Drähte gegenüber dem Statorpaket 4 isoliert.

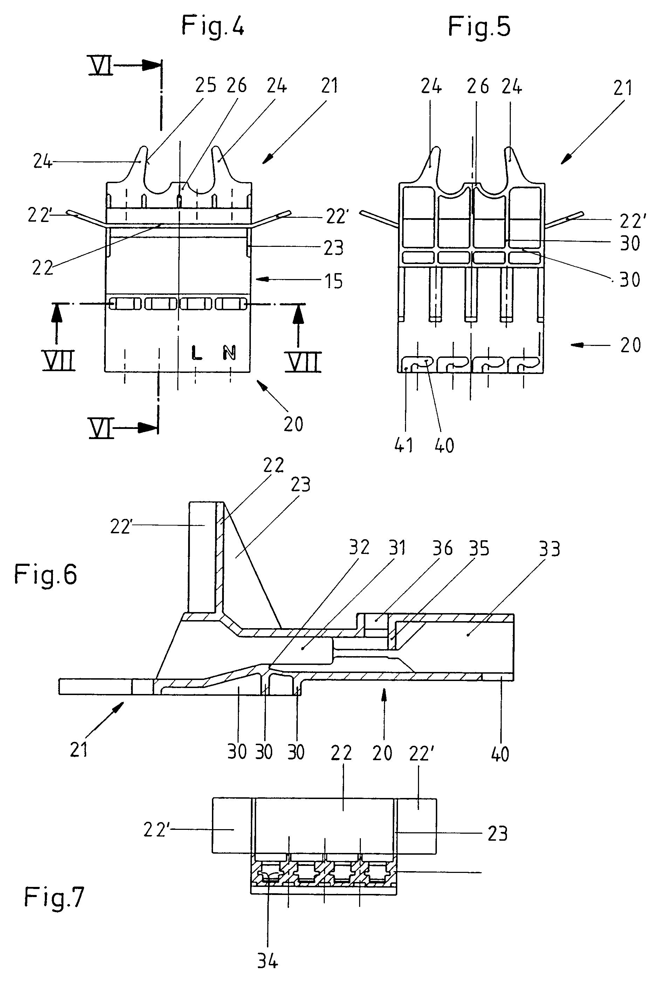

Wie aus Fig. 5 ersichtlich, sind an der Unterseite sowohl des Fußes 21 als auch des Gehäuseteils 20 des Steckerteils 15 Aussparungen vorgesehen, zwischen welchen Versteifungsrippen 30 angeordnet sind. So wird Material und Gewicht eingespart und dennoch eine hinreichende Stabilität des Steckerteils 15 erreicht.

Wie in Fig. 6 gezeigt, befindet sich im Steckerteil ein Aufnahmeraum 31, in dem an sich bekannte Kontaktzungen/Kontakthülsen oder Stecker/Steckhülsen als Kontakte aufgenommen sind. Die Kontaktzungen/Kontakthülsen oder Stekker/Steckhülsen werden, wie an sich bekannt, durch federnde Zungen, die hinter die Stufe 32 im Raum 31 des Gehäuseteils 20 einrasten, im Steckerteil 15 festgehalten.

Durch eine Öffnung 33 im vom Fuß 21 abgekehrten Ende des Steckerteils 15, d.h. dem offenen Ende des Gehäuses 20, werden Kontaktzungen, die entweder in ein Steckergehäuse 16, 17 integriert sind, oder die einfach an dem Ende einer Litzenleitung befestigt sind, so weit eingeschoben, bis sie von in den Seitenwänden vorgesehenen Führungsnuten 34 geführt (sh. auch Fig. 7) in den Raum 31 bzw. in die dort vorgesehenen Kontaktzungen/Kontakthülsen oder Stecker/Steckhülsen eingreifen und die elektrisch leitende Verbindung hergestellt ist, wobei eine an den Kontaktzungen/Kontakthülsen befindliche, an sich bekannte Feder hinter das untere Ende einer Wand 35 einrastet.

Um die Kontaktzungen/Kontakthülsen wieder lösen zu können, sind im Gehäuse 20 Öffnungen 36 vorgesehen, durch welche die Kontaktzungen/Kontakthülsen bzw. deren Federn unter das untere Ende der Wand 35 gedrückt werden können, so daß die Kontaktzungen/Kontakthülsen wieder aus dem Gehäuse 20 des Steckerteils 15 herausgezogen werden können.

Wie insbesondere aus Fig. 5 ersichtlich, sind an dem Boden des Gehäuseteils 20 neben den Ausnehmungen 33 noch Ausnehmungen 40 vorgesehen, die mit den nach hinten offenen Ausnehmungen 33 über Durchgänge 41 in Verbindung stehen. Die mit den in den Steckerteil 15 eingesetzten Zungen verbundenen Litzen können durch die Verbindungen 41 in die Ausnehmungen 40 gelegt werden, so daß eine achsial gerichtete Ableitung von Litzen möglich ist. Gewöhnlich ragen die Litzen radial weg, indem sie einfach durch die Öffnungen 33 des Steckerteils 15 ins Freie führen.

Es ist noch darauf hinzuweisen, daß das Gehäuse 20 eines Steckerteils 15 ohne den die Öffnungen 33 bzw. 40 aufweisenden Gehäuseabschnitt ausgeführt sein kann bzw. ist dieser Gehäuseabschnitt kürzer ausgeführt, wenn der Stekkerteil 15 in erster Linie für das Zusammenwirken mit Steckern 16, 17 oder einem Stecker 18 gemäß Fig. 3 bestimmt ist. In diesem Fall ist aber ebenfalls die Kontaktierung der in den Räumen 31 aufgenommenen Kontaktzungen/Kontakthülsen oder Stecker/Steckhülsen durch Einzelzungen/Einzelhülsen möglich, wobei lediglich dafür zu sorgen ist, daß diese entsprechend isoliert werden (Aufschieben von Isolationsschläuchen).

Wie weiter oben erwähnt, sitzt der Steckerteil 15 zunächst durch reib- und/oder formschlüssigen Angriff seines Fußes 21 an den Enden von zwei benachbarten Nutenisolierungen 13 für die Wicklungen 5 des Statorpaketes am Statorpaket 4 fest. Dabei liegt die Unterseite des Stekkerteils 15 an der ihm zugekehrten Stirnfläche 4′ des Statorpaketes 4 an. Eine zusätzliche Sicherung wird dadurch erreicht, daß im Lagerschild 6 eine Aussparung 45 vorgesehen ist, die, wie aus Fig. 2 ersichtlich, zum freien Rand des Lagerschildes 6 hin offen ist, wobei die Ränder 46 dieser Aussparung 45 wenigstens von einer Seite her am Steckerteil 15 anliegen. Gewöhnlich genügt ein Anliegen auf der Seite des Gehäuses 20 des Steckerteils 15, die der auf der Stirnfläche 4′ des Statorpaketes 4 aufliegenden Unterseite des Steckerteils 15 gegenüberliegt. Eine zusätzliche Verbesserung des Sitzes wird erreicht, wenn die seitlichen, d.h. zur Achse 12 etwa parallelen Ränder der Aussparung 45 an den Seitenwänden des Gehäuses 20 des Steckerteils 15 ebenfalls anliegen.

## Patentansprüche

1. Elektromotor (1), insbesondere Rasenmähermotor, mit einem Steckerteil (15) für die Kontaktierung der Drähte von Statorwicklungen (5) des Elektromotors (1), wobei der Steckerteil (15) einen Fuß (21) aufweist, der an der einen Stirnfläche (4′) des Statorpaketes (4) anliegt und der zwei vorspringende Zinken (24), die an den voneinander abgekehrten Seiten zweier benachbarter Nutisolierungen (13) anliegen, und einen Vorsprung (26) aufweist, der zwischen den beiden Zinken (24) angeordnet ist und zwischen benachbarte Nutisolierungen (13) eingreift, und wobei im Steckerteil (15) Kontakte eingesetzt sind, mit welchen die die Statorwicklung (5) bildenden Drähte unmittelbar, elektrisch leitend verbunden sind, dadurch gekennzeichnet, daß der zwischen den Zinken (24) angeordnete Vorsprung (26) kürzer ist als die Zinken (24), daß zwischen dem an Nutisolierungen (13) der Statorpaketwicklung (5) anliegenden Fuß (21) und dem Gehäuse (20) des Steckerteils (15) auf der vom Stator (4) abgekehrten Seite desselben eine in Richtung der Rotorachse (12) ausgerichtete Wand (22) vorgesehen ist, die sich radial außerhalb des Kopfes der Statorwicklung (5) erstreckt.

2. Motor nach Anspruch 1, dadurch gekennzeichnet, daß die einander zugekehrten Ränder (25) der Zinken (24) des Fußes (21) des Steckerteils (15) vom Steckerteil (15) weg aufeinander zu konvergieren und federnd ausgeführt sind.

3. Motor nach Anspruch 1 oder 2, dadurch gekennzeichnet, daß im Steckerteil zwei nebeneinander angeordnete Anschlußkontakte für die Netzzuleitung und zwei nebeneinander angeordnete Anschlußkontakte für die Kondensatorableitung vorgesehen sind.

4. Motor nach Anspruch 1, dadurch gekennzeichnet, daß die Enden (22′) der Wand (22) seitlich über das Gehäuse (20) des Steckerteils (15) vorstehen und zum Kopf der Wicklung (5) hin abgewinkelt sind.

5. Motor nach Anspruch 1 oder 4, dadurch gekennzeichnet, daß die vom Steckergehäuse (20) abstehende Wand (22) gegenüber dem Steckerteil (15) durch Versteifungsrippen (23), vorzugsweise zwei Versteifungsrippen (23), am Ende des Gehäuses (20) des Steckerteils (15) abgestützt ist.

6. Motor nach Anspruch 5, dadurch gekennzeichnet, daß in dem Lagerschild (6), das auf der Seite des Stators (4) angesetzt ist, an dem auch der Steckerteil (15) befestigt ist, eine einseitig offene Ausnehmung (45) vorgesehen ist und daß der der offenen Seite der Ausnehmung (45) gegenüberliegende Rand (46) der Ausnehmung (45) an der von der Stirnfläche (4′) des Stators (4) abgekehrten Fläche des Steckerteils (15), neben dem radial äußeren Ende der Versteifungsrippen (23) anliegt.

7. Motor nach einem der Ansprüche 1 bis 6, dadurch gekennzeichnet, daß dem Steckerteil (15) zwei zweipolige Stecker (16, 17), die gegebenenfalls durch eine rast- oder druckknopfartige Verbindung zu einem vierpoligen Stecker vereinigt werden können, zugeordnet sind.

8. Motor nach einem der Ansprüche 1 bis 7, dadurch gekennzeichnet, daß der Steckerteil (15) über die Kontakte, die mit den Drähten der Statorwicklung unmittelbar verbunden sind, nach außen verlängert ist und daß die Kontakte für eine unmittelbare Verbindung mit Kontaktzungen eingerichtet sind, wobei am dem Fuß (21) abgekehrten Ende des Steckerteils (15), bezogen auf die Achse des Stators (4), radiale Auslaßöffnungen (33) für Litzen und/oder axial gerichtete Austrittsöffnungen (40) für Litzen vorgesehen sind.

9. Motor nach Anspruch 8, dadurch gekennzeichnet, daß die radialen Austrittsöffnungen (33) mit den axialen Austrittsöffnungen (40) durch jeweils eine Verbindungsöffnung (41) verbunden sind.

10. Motor nach einem der Ansprüche 1 bis 9, dadurch gekennzeichnet, daß in der von der Stirnfläche (4′) des Stators (4) abgekehrten Wand des Gehäuses (20) des Steckerteils (15) im Bereich jedes Kontaktes ein Fenster (36) vorgesehen ist, durch das eine Rastfeder einer Kontaktzunge zum Lösen von Kontaktfedern niedergedrückt werden kann.

## Claims

1. Electric motor (1), in particular lawn mower motor, with a plug part (15) for making contact to the wires of stator windings ( 5) of the electric motor (1), in which the plug part (15) comprises a base (21) which rests on one of the end surfaces (4′) of the stator plates (4) and which comprises two projecting prongs (24), which rest on the sides facing away from one another of two neighbouring slot insulations (13), and a projection (26), which is arranged between the two prongs (24) and engages between neighbouring slot insulations (13), and in which contacts are inserted in the plug part (15) with which the wires forming the stator winding (5) are directly connected in an electrically conducting manner, characterised in that the projection (26) arranged between the prongs (24) is shorter than the prongs (24), that between the base (21) resting on slot insulations (13) of the stator plate winding (5) and the housing (20) of the plug part (15) on the side of the latter facing away from the stator (4) a wall (22) is provided oriented in the direction of the rotor axis (12) which extends radially outside the head of the stator winding (5).

2. Motor according to claim 1, characterised in that the edges (25) facing each other of the prongs (24) of the base (21) of the plug part (15) are constructed in a springing manner and to converge towards one another away from the plug part (15).

3. Motor according to claim 1 or 2, characterised in that two adjacently arranged connection contacts for the mains supply and two adjacently arranged connection contacts for the condenser discharge are provided in the plug part.

4. Motor according to claim 1, characterised in that the ends (22′) of the wall (22) project laterally over the housing (20) of the plug part (15) and are angled towards the head of the winding (5).

5. Motor according to claim 1 or 4, characterised in that the wall (22) projecting from the plug housing (20) is supported with respect to the plug part (15) by means of bracing ribs (23), preferably two bracing ribs (23), at the end of the housing (20) of the plug part (15).

6. Motor according to claim 5, characterised in that in the mounting plate (6), which is set on the side of the stator (4), to which the plug part (15) is also attached, a recess (45) open on one side is provided and that the edge (46) of the recess (45) located opposite the open side of the recess (45) rests on the surface of the plug part (15) facing away from the end surface (4′) of the stator (4), beside the radially outer end of the bracing ribs (23).

7. Motor according to any of the claims 1 to 6, characterised in that two two-pin plugs (16, 17), which if need be can be combined by means of a notch-like or snap-like connection to a four-pin plug, are associated with the plug part (15).

8. Motor according to any of the claims 1 to 7, characterised in that the plug part (15) is extended outwardly through the contacts which are directly connected to the wires of the stator winding, and that the contacts are fitted with contact tongues for a direct connection, while, with reference to the axis of the stator (4), radial outlet openings (33) for braided wires and/or axially oriented exit openings (40) for braided wires are provided at the end of the plug part (15) facing away from the base (21).

9. Motor according to claim 8, characterised in that the radial exit openings (33) are connected to the axial exit openings (40) by a connecting opening (41) in each case.

10. Motor according to any of the claims 1 to 9, characterised in that in the wall of the housing (20) of the plug part (15) facing away from the end surface (4′) of the stator (4), a window (36) is provided in the region of each contact through which a stop spring of a contact tongue can be pressed down to release contact springs.

## Revendications

1. Moteur électrique (1), en particulier moteur pour tondeuse à gazon, comprenant une partie de connecteur (15) pour l'établissement du contact des fils de l'enroulement statorique (5) du moteur électrique (1), la partie de connecteur (15) présentant un pied (21) qui est appliqué contre une face frontale (4′) du paquet de tôles statorique (4) et qui présente deux dents saillantes (24) appliquées contre les côtés, éloignés l'un de l'autre, de deux isolations d'encoches (13) voisines, et une saillie (26) qui est disposée entre les deux dents (24) et s'engage entre deux isolations d'encoches (13) voisines, des contacts à l'aide desquels les fils constituant l'enroulement statorique (5) sont directement connectés électriquement étant rapportés dans la partie de connecteur (15), caractérisé par le fait que la saillie (26) disposée entre les dents (24) est plus courte que les dents (24), et qu'entre le pied (21) appliqué contre des isolations d'encoches (13) de l'enroulement statorique (5) et le boîtier (20) de la partie de connecteur (15), il est prévu, sur le côté de la partie de connecteur éloigné du stator (4), une paroi (22) orientée suivant l'axe de rotor (12) et s'étendant radialement à l'extérieur de la tête de l'enroulement statorique (5).

2. Moteur suivant la revendication 1, caractérisé par le fait que les dents (24) du pied (21) de la partie de connecteur (15) sont réalisées, à l'endroit de leurs bords (25) tournés l'un vers l'autre, de manière à converger l'une vers l'autre et sont élastiques.

3. Moteur suivant la revendication 1 ou 2, caractérisé par le fait que dans la partie de connecteur sont prévus deux contacts de connexion disposés côte à côte pour le raccordement au secteur et deux contacts de connexion disposés côte à côte pour le raccordement du condensateur.

4. Moteur suivant la revendication 1, caractérisé par le fait que les extrémités (22′) de la paroi (22) dépassent latéralement sur le boîtier (20) de la partie de connecteur (15) et sont coudées vers la tête de l'enroulement (5).

5. Moteur suivant la revendication 1 ou 4, caractérisé par le fait que la paroi (22) faisant saillie sur le boîtier de connecteur (20) est renforcée par rapport à la partie de connecteur (15) par des nervures de raidissement (23), de préférence deux nervures de raidissement (23), à l'extrémité du boîtier (20) de la partie de connecteur (15).

6. Moteur suivant la revendication 5, caractérisé par le fait que dans le flasque-palier (6) rapporté sur le côté du stator (4) sur lequel est également fixée la partie de connecteur (15), il est prévu un évidement (45) ouvert d'un côté, et que le bord (46) de l'évidement (45), opposé au côté ouvert de l'évidement (45), est appliqué contre la face de la partie de connecteur (15) éloignée de la face frontale (4′) du stator (4), à côté de l'extrémité radialement extérieure des nervures de raidissement (23).

7. Moteur suivant l'une des revendications 1 à 6, caractérisé par le fait qu'à la partie de connecteur (15) sont associés deux connecteurs bipolaires (16, 17) qui peuvent le cas échéant être réunis sous la forme d'un connecteur quadripolaire par une liaison à encliquetage ou du type bouton-pression.

8. Moteur suivant l'une des revendications 1 à 7, caractérisé par le fait que la partie de connecteur (15) est prolongée vers l'extérieur par des contacts qui sont directement reliés aux fils de l'enroulement statorique et que les contacts sont établis pour une liaison directe avec des languettes de contact, la partie de connecteur (15) présentant, à l'extrémité éloignée du pied (21), des ouvertures (33) radiales par rapport à l'axe du stator (4) pour des conducteurs souples et/ou des ouvertures (40) orientées axialement par rapport à l'axe du stator (4) pour des conducteurs souples.

9. Moteur suivant la revendication 8, caractérisé par le fait que les ouvertures de sortie (33) radiales sont reliées aux ouvertures de sortie (40) axiales par une ouverture de liaison (41), respectivement.

10. Moteur suivant l'une des revendications 1 à 9, caractérisé par le fait que dans la paroi du boîtier (20) de la partie de connecteur (15), éloignée de la face frontale (4′) du stator (4), il est prévu, dans la zone de chaque contact, une fenêtre (36) à travers laquelle un ressort d'encliquetage d'une languette de contact peut être abaissé en vue de la libération de ressorts de contact.
